# EUROPEAN PATENT SPECIFICATION

(11) **EP 4 621 403 B1**
(45) Date of publication and mention of the grant of the patent: **30.09.2026**
(21) Application number: 25165077.6
(22) Date of filing: 20.03.2025
(51) Int. Cl.: G01N 29/48, G06N 20/00, G01N 29/11, G01N 29/34, G01N 29/44

(54) **ESTIMATION OF SCALING IN OBJECTS BY PROCESSING ULTRASOUND RESPONSES USING MACHINE LEARNING (ML)**
SCHÄTZUNG DER SKALIERUNG IN OBJEKTEN DURCH VERARBEITUNG VON ULTRASCHALLREAKTIONEN UNTER VERWENDUNG VON MASCHINELLEM LERNEN (ML)
ESTIMATION DE MISE À L'ÉCHELLE DANS DES OBJETS PAR TRAITEMENT DE RÉPONSES ULTRASONORES À L'AIDE D'UN APPRENTISSAGE AUTOMATIQUE (ML)

(30) Priority: 22.03.2024 IN 202421022310
(43) Date of publication of application: 24.09.2025
(73) Proprietor: Tata Consultancy Services Limited, Mumbai, Maharashtra 400 021 (IN)
(72) Inventor: SAINI, Parvesh, 411057 Pune, Maharashtra (IN); MAITI, Soumyadipta, 411057 Pune, Maharashtra (IN); RAI, Beena, 411028 Pune, Maharashtra (IN)
(74) Representative: Goddar, Heinz J.

(56) References cited:
- WO-A1-2009/141135
- KR-A- 20040 056 821
- US-A1- 2003 024 316
- US-A1- 2009 308 161
- US-A1- 2016 370 325

## Description

### CROSS-REFERENCE TO RELATED APPLICATIONS AND PRIORITY

The present application claims priority to Indian application no. 202421022310, filed on March 22, 2024.

### TECHNICAL FIELD

The embodiments herein generally relate to the field of ultrasound signal processing and, more particularly, to a method and system for estimation of scaling in objects by processing ultrasound responses using machine learning (ML).

### BACKGROUND

Deposition of scaling inside objects, specifically enclosed objects such as pipelines and tanks and the like, is a common problem in industries as it can impact flow rate of material, process parameters, and the life of the system. Thus, it is crucial to keep track of the scaling deposition in an object. Conventional approaches use ultrasonic signal processing based approaches to determine the scaling inside pipes and similar objects. However, conventional Ultrasonic Device requires expensive Original Equipment Manufacturer (OEM) using parts like the piezoelectric probe, and the pulse generator along with high-voltage pulses, going up to 200 volts.

Further, hardly any Ultrasound (US) based approaches is used to determine scaling. Some existing US based systems mention using low-voltage US signal generation, but the application is limited to detecting a finger touch event. Even though this existing method refers to using low-voltage US signal generation, the US signal so generated is of low intensity and not applicable for tasks such as scaling which requires the US signal to penetrate thick metal structures. Thus, existing methods are required to use high voltage for such US signal generation. Further, touch signal generated by the finger touch event is mechanical in nature and focusses on different features than that for scaled surface.

Furthermore, US signal response from damaged structures such as scaling, or deposition or corrosion is more complex to analyze. Almost all ultrasonic applications for thickness measurement use.time of flight. Calculations and speed of sound in the medium to estimate the thickness. But for more complex scenarios like scaling measurements, it might not be possible with such a simple metric due to the fact that the multiple interfaces are involved here result in multiple reflections, which makes it challenging to map which surface resulted in which refection. Thus, making normal calculation of measuring time of flight is impractical.

One approach to address this complex signal analysis is features extraction and Machine Learning (ML) based estimation. One recent work titled 'Ultrasonic (US) tomography *method and system for evaluating pipeline corrosion'.*

The above existing method is limited to corrosion, wherein corrosion refers to degrading of existing structure while scaling is deposition of unwanted material on existing structures. Thus, features or characteristics associated with each of them are different and require different analysis approaches. Further, the above existing method is based on analysis of ultrasound signals using US tomography, which requires image generation from the US signal response. Thus, US tomography additionally requires resources to generate images and adds computational overhead.

Few other existing methods used ultrasonic low frequency signal for pipe scaling detection. However, these method rely on guided wave ultrasonic set up and not on simple Ultrasonic testing.

US2009308161A1 discloses detecting the presence of a hydrate deposit or a condensate in a container, more specifically in a pipeline, by identifying certain characteristics of an acoustic signal emitted from a wall of the container in response to a spectrally broad acoustic signal being transmitted from a transducer, towards the container.

US2016370325A1 discloses generating, by an acoustical wave generator, an acoustical wave within a fluid path of a fluid distribution system; sensing, at a first acoustical sensor and at a second acoustical sensor, the acoustical wave; determining, by an acoustical signal analysis module, an amount of tuberculation within the fluid distribution system by analysing the sensed acoustical wave.

US2003024316A1 discloses two methods of measuring acoustic impedance of deposits based on acoustic reflectance (longitudinal or shear). In the first method, deposition impedance is computed from the amplitude of reflected acoustic signal arriving from the delay wedge/pipe wall interface and the wall-deposition interface. The other method additionally measures acoustic reflection from the remote end of the transducer backing and uses the reflected amplitude as a reference.

WO2009141135A1 discloses a method for a high precision measurement of a characteristic of a fouling and/or scaling deposit inside a fluid vessel or of a characteristic of a portion of the wall inside a fluid vessel, wherein an ultrasonic transducer is used, wherein a reflection area is provided in a portion of the wall or attached to a portion of the wall of the fluid vessel at a location substantially opposite of the ultrasonic transducer, wherein the method comprises the steps of: a) emitting an ultrasonic emission signal by means of the ultrasonic transducer and b) measuring the distance between the ultrasonic transducer on the one hand and a fluid/deposit interface or a fluid/wall interface on the other hand in an absolute distance measurement by means of evaluating the time-domain reflective signal of the fluid/ deposit or fluid/wall interface, wherein the fluid/deposit or fluid/wall interface is either the interface of the fluid with the deposit on the reflection area or the interface of the fluid with the wall in the reflection area, wherein the time-domain resolution power is 1 ns or less than 1 ns.

KR20040056821A discloses detecting a deposit based on both the time of flight and the attenuation of the reflected (or transmitted) signal.

As mentioned above, a simple US set up that operates on low-voltage US signal but capable of penetrating metal structures needs to be explored.

### SUMMARY

Embodiments of the present disclosure present technological improvements as solutions to one or more of the above-mentioned technical problems recognized by the inventors in conventional systems.

For example, in one embodiment, a method for scaling estimation is provided. The method includes receiving an ultrasonic signal response reflected by an object under inspection when an ultrasound signal is incident on the object, wherein a profile of the ultrasound signal is a gated pulse signal with a plurality of pulses per packet, and wherein the received ultrasonic signal response for each of the plurality of pulses, is captured across a predefined time interval.

Further, the method includes processing the ultrasonic signal response received for each of the plurality of pulses to obtain, (i) an envelope of ultrasonic response signal comprising an upper curve and a lower curve, and (ii) a difference curve by computing difference between the upper curve and the lower curve.

Further, the method includes extracting a plurality of features from the processed ultrasonic signal response for each of the plurality of pulses comprising: A) slicing the upper curve and the difference curve, into a plurality of predefined segment intervals to obtain a significant point per segment interval representing an associated feature among the plurality of features, wherein the significant point is (i) a middle point of a segment interval if a maximum value and a minimum value of the segment interval lies on edge of the segment interval, and (ii) if the minimum value or the maximum value of the segment interval lies inside the segment interval, the associated point is the significant point. B) Deriving an additional significant point by computing a ratio of a pulse amplitude of the plurality of pulses to a maximum response amplitude in the ultrasonic signal response, wherein the significant point per segment interval of the upper curve and the difference curve, and the additional significant point define the plurality of features.

Further, the method includes processing the plurality of features for each of the plurality of pulses by a pretrained Machine Learning (ML) model to estimate presence of scaling in the object as one of no scaling, thin scaling, and thick scaling.

In another aspect, a system for scaling estimation is provided. The system comprises a memory storing instructions; one or more Input/Output (I/O) interfaces; and one or more hardware processors coupled to the memory via the one or more I/O interfaces, wherein the one or more hardware processors are configured by the instructions to receive an ultrasonic signal response reflected by an object under inspection when an ultrasound signal is incident on the object, wherein a profile of the ultrasound signal is a gated pulse signal with a plurality of pulses per packet, and wherein the received ultrasonic signal response for each of the plurality of pulses, is captured across a predefined time interval.

Further, the system is configured to process the ultrasonic signal response received for each of the plurality of pulses to obtain, (i) an envelope of ultrasonic response signal comprising an upper curve and a lower curve, and (ii) a difference curve by computing difference between the upper curve and the lower curve.

Further, the system is configured to extract a plurality of features from the processed ultrasonic signal response for each of the plurality of pulses comprising: A) slicing the upper curve and the difference curve, into a plurality of predefined segment intervals to obtain a significant point per segment interval representing an associated feature among the plurality of features, wherein the significant point is (i) a middle point of a segment interval if a maximum value and a minimum value of the segment interval lies on edge of the segment interval, and (ii) if the minimum value or the maximum value of the segment interval lies inside the segment interval, the associated point is the significant point. B) Deriving an additional significant point by computing a ratio of a pulse amplitude of the plurality of pulses to a maximum response amplitude in the ultrasonic signal response, wherein the significant point per segment interval of the upper curve and the difference curve, and the additional significant point define the plurality of features.

Further, the system is configured to process the plurality of features for each of the plurality of pulses by a pretrained Machine Learning (ML) model to estimate presence of scaling in the object as one of no scaling, thin scaling, and thick scaling.

In yet another aspect, there are provided one or more non-transitory machine-readable information storage mediums comprising one or more instructions, which when executed by one or more hardware processors causes a method for scaling estimation. The method includes receiving an ultrasonic signal response reflected by an object under inspection when an ultrasound signal is incident on the object, wherein a profile of the ultrasound signal is a gated pulse signal with a plurality of pulses per packet, and wherein the received ultrasonic signal response for each of the plurality of pulses, is captured across a predefined time interval.

Further, the method includes processing the ultrasonic signal response received for each of the plurality of pulses to obtain, (i) an envelope of ultrasonic response signal comprising an upper curve and a lower curve, and (ii) a difference curve by computing difference between the upper curve and the lower curve.

Further, the method includes extracting a plurality of features from the processed ultrasonic signal response for each of the plurality of pulses comprising: A) slicing the upper curve and the difference curve, into a plurality of predefined segment intervals to obtain a significant point per segment interval representing an associated feature among the plurality of features, wherein the significant point is (i) a middle point of a segment interval if a maximum value and a minimum value of the segment interval lies on edge of the segment interval, and (ii) if the minimum value or the maximum value of the segment interval lies inside the segment interval, the associated point is the significant point. B) Deriving an additional significant point by computing a ratio of a pulse amplitude of the plurality of pulses to a maximum response amplitude in the ultrasonic signal response, wherein the significant point per segment interval of the upper curve and the difference curve, and the additional significant point define the plurality of features.

Further, the method includes processing the plurality of features for each of the plurality of pulses by a pretrained Machine Learning (ML) model to estimate presence of scaling in the object as one of no scaling, thin scaling, and thick scaling.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for estimation of scaling in objects by processing ultrasound responses using machine learning (ML), in accordance with some embodiments of the present disclosure.
FIG. 1B illustrates an architectural overview of the system of FIG. 1A, in accordance with some embodiments of the present disclosure.
FIGS. 2A and 2B (collectively referred as FIG. 2) is a flow diagram illustrating a method for estimation of scaling in objects by processing ultrasound responses using machine learning (ML), using the system depicted in FIG. 1A and 1B, in accordance with some embodiments of the present disclosure.
FIG. 3 depicts frequency response for a continuous pulse trigger for determination of natural vibration frequency of a piezoelectric crystal transducer in an ultrasound based setup, in accordance with some embodiments of the present disclosure.
FIGS. 4A through 4E depict experiments conducted for determining optimal pulse count per pulse of a gated pulse signal (excitation signal) for generating ultrasonic signal incident on an object under inspection, wherein the gate width is controlled by a Pulse Width Modulated (PWM) signal, in accordance with some embodiments of the present disclosure.
FIG. 5 depicts generation of the PWM signal, in accordance with some embodiments of the present disclosure.
FIGS. 6A through 6C depict generation of the excitation signal used by the system of FIG. 1B, in accordance with some embodiments of the present disclosure.
FIGS. 7A through 7C depict processing of an ultrasonic signal response reflected from an object under inspection by the system of FIG. 1B, in accordance with some embodiments of the present disclosure.
FIGS. 8A and 8B depict performance of the system 100 with different ML model, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As discussed earlier, to analyze complexity of response Ultrasound (US) signal from deformed structures, such as scaling deposition on inner sides of objects, direct simple measurement techniques such as time of flight, speed of sound in medium to estimate thickness are not feasible. Thus, Machine Learning (ML) based approaches may provide better solutions.

One of the applications that closely resembles scaling is detection of food fouling due to deposition. One of the existing methods titled *'Monitoring the cleaning of food fouling in pipes using ultrasonic measurements and* machine *learning'* used US signal and ML. However, the limitation of the US signal, interchangeably referred to as ultrasonic signal, used in the existing approach is requirement of high voltage to generate US signal to enable penetration into metal structures. Further, existing US set ups rely on complex grid search methods. The grid search requires complex set up and extensive processing of received US responses, effectively provides a less efficient approach.

However deriving optimal features by tapping minimal but enough appropriate points in the US signal response is critical for ML analysis. It is important that minimal but significant points on the US signal response be extracted, and features be derived from them for time and resource efficient ML based computation.

Embodiments of the present disclosure provide a method and system for estimation of scaling in objects by processing ultrasound responses using machine learning (ML). The system uses low-voltage pulse packets to generate ultrasonic (US) waves, using a repurposed piezoelectric transducer. The repurposed transducer enables lowering the cost of US setup and also allows to use low voltage triggers. The low cost, low-voltage set up increases practical usability of system with hand held device based US set up for pipe scaling estimation. The train of pulses in the single trigger (excitation) signal used by the system enables penetrating metal structures even at low-voltage. These waves reflect from the object-scaling interface and scaling-fluid interface, generating an acoustic response, which is the US signal response, or simply referred to as response. The response is captured using the repurposed piezoelectric transducer. The US signal response is passed through an ML-based feature extraction for extracting unique 42 features by processing the envelope of the US signal response and scaling estimation providing the amount of scaling. The feature extraction is based on segment-wise optimal number of critical point selection using rules. The reduced data points are most significant and fewer, resulting in more efficient use of data, as fewer features implies less training examples for the ML model, effectively providing efficient training.

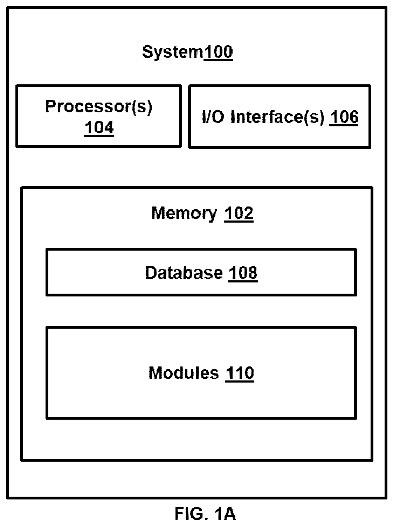

Referring now to the drawings, and more particularly to FIGS. 1A through 8B, where similar reference characters denote corresponding features consistently throughout the figures, there are shown preferred embodiments, and these embodiments are described in the context of the following exemplary system and/or method.

FIG. 1A is a functional block diagram of a system 100 for estimation of scaling in objects by processing ultrasound responses using machine learning (ML), in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

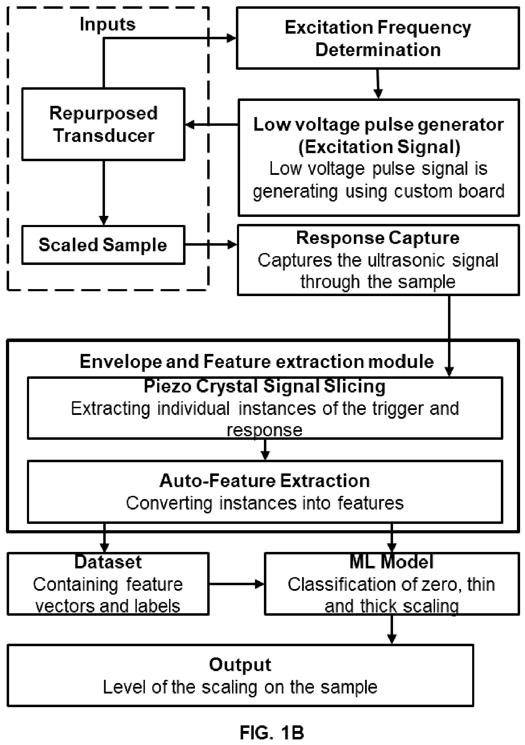

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices. As depicted in FIG. 1B, which illustrates an architectural overview of the system 100, a piezo electric transducer (repurposed transducer) that incidents an ultrasonic signal on an object under inspection and receives a response of the ultrasonic (US) signal, is connected to the system via the I/O interface 106.

The system 100 also includes a low-voltage pulse generator (custom board hardware as depicted in FIG. 1B) that generates a gated pulse signal (excitation signal or trigger signal) using a Pulse Width Modulated (PWM) signal gating and signal with excitation frequency.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as an envelope and feature extraction module (depicted FIG. 1B), and a Machine Learning (ML) model (depicted FIG. 1B). The ultrasonic signal response received via the I/O interface is processed sequentially by the envelope and feature extraction module and the Machine Learning (ML) model to estimate the intensity of scaling present in the object under inspection. The result estimated by the ML model can be displayed to the user via the graphical or web interface on user end device such as the mobile device, laptop, and the like.

The plurality of modules 110 include programs or coded instructions that supplement applications or functions performed by the system 100 for executing different steps involved in the process of estimation of scaling in objects by processing ultrasound responses using ML, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110. Further the database 108 can store training dataset of ultrasonic signal responses, wherein the ML model is pretrained (also referred to as pretrained ML model) by a set of 41 features extracted by slicing the ultrasonic signal responses of the training dataset (as depicted in FIG. 1B) of the ML model.

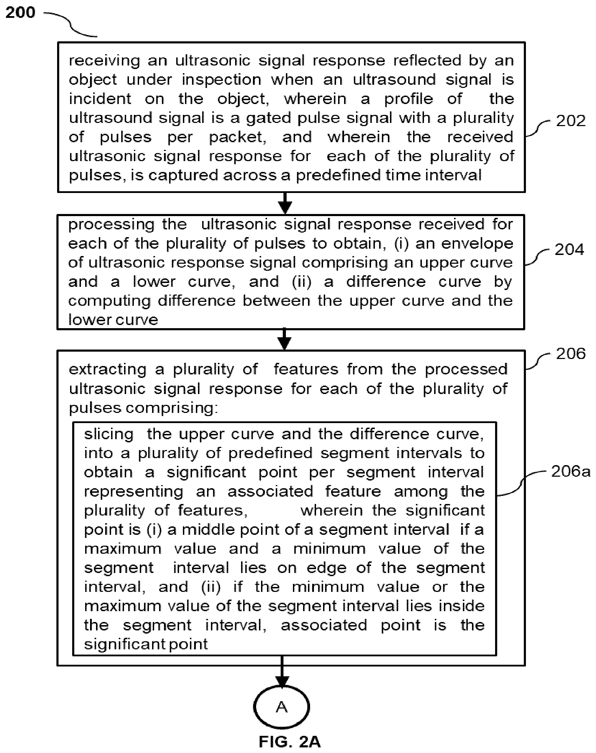

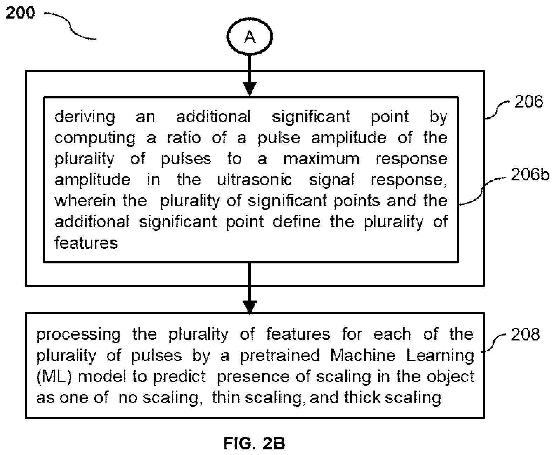

Although the database 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in the flow diagram in FIG. 2, and FIG. 3 through FIG. 8B.

FIG. 1B illustrates an architectural overview of the system of FIG. 1A, in accordance with some embodiments of the present disclosure. The components and functional blocks of the system 100 are explained below.

**Transducer (also referred to as repurpose transducer):** The system 100 includes the transducer used to generate ultrasonic waves which then interact with the specimen and response is analyzed to get measurements. The transducer is usually a piezoelectric crystal that flexes and bends when external electric potential is applied to it. Thus, it can be excited using an electrical signal to generate ultrasonic waves of desired characteristics. For ultrasonic non-destructive testing, frequencies in the order of MHz are usually used. Also, it is recommended to have the wavelength of the signal significantly less than the dimension being measured. Thus, for designing a device frequency should be selected in such a way that it is able to measure the smallest dimension that is expected to encounter. Usually, high frequencies provide better resolution for the measurement, but it also suffers from the issue of scattering.

The transducer used here is not an OEM probe but is a repurposed element of a humidifier device, which is being used to generate and capture the ultrasonic signals with a frequency range of 1-2 MHz. The advantage of this transducer is that it can be operated at a much lower voltage (3.3V - 12V) unlike the OEM counterparts (~ 200V) and is also low cost in comparison, making it more affordable. This provides low cost handheld system. The above repurposed element of the humidifier, referred to as the repurposed transducer, is the piezoelectric transducer used by the US set up of system 100.

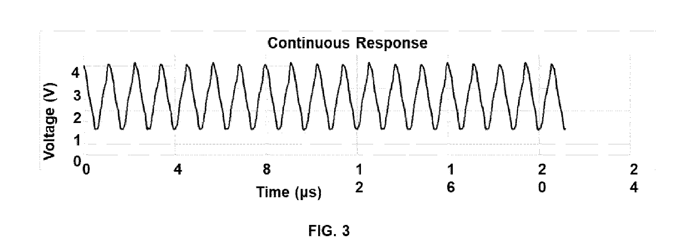

**Natural Frequency Determination:** To get maximum response out of a piezoelectric transducer, it is preferable to operate it near its natural frequency. As the Piezoelectric crystals in the probe can be different in size and materials, their natural frequency also varies. As the piezo electric transducer used here is repurposed, its natural frequency is not exactly known and needs to be determined. To determine the frequency, a frequency sweep is carried out. A continuous square wave is applied to the probe and the response is monitored. Now, the frequency was varied slowly to find the frequency that resulted in resonance, and the maximum response amplitude was observed. This frequency, as depicted in FIG. 3 is then selected as the pulse frequency within the pulses of the excitation signal.

**Excitation Signal Generation (gated pulse signal):** The excitation signal is an electric signal that is applied to the transducer causing it to flex and bend to generate ultrasonic waves. The profile of the electric pulse determines the profile of the ultrasonic signal generated by the transducer. This profile of the ultrasonic signal has a direct effect on the response which will be captured by the receiver. Unlike existing high voltage requirements for US signal generation, the objective is to generate a low-voltage trigger. The method and system 100 disclosed herein achieves this by using multiple pulses in a single trigger signal, thus giving it more penetration for a low-voltage trigger.

Furthermore, the technical advancement of using multiple pulse approach is that the traditional approach of having one single pulse might not result in a response that is observable on the receiver. Thus, a packet comprising multiple pulses at natural frequency needs to be used. An optimal number of pulses are used inside the trigger packet because it cannot be an arbitrary value as too few pulses (minimum number of pulses) might not produce an observable response and too many pulses (maximum number of pulses) would make the packet too long that it might start interfering with the response signal.

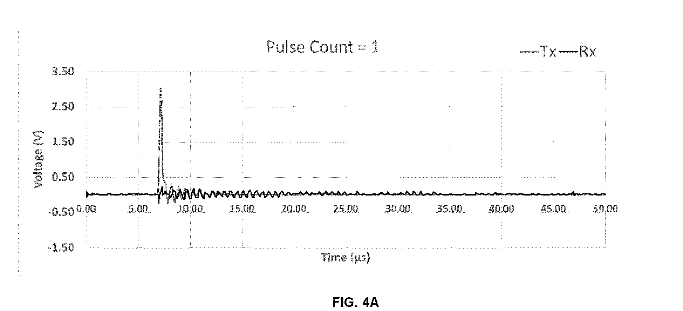

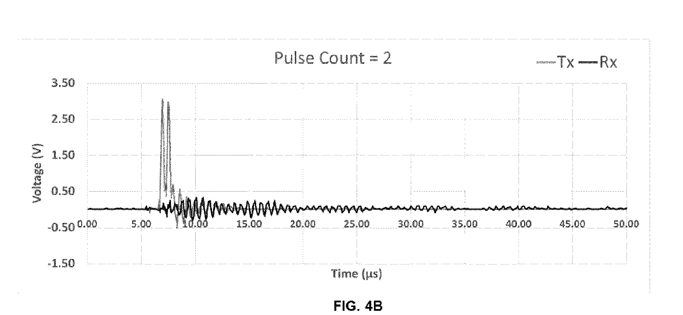

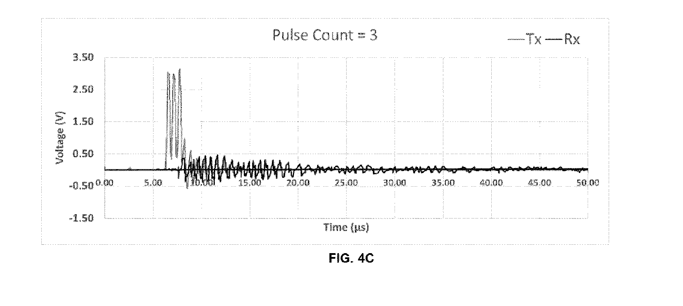

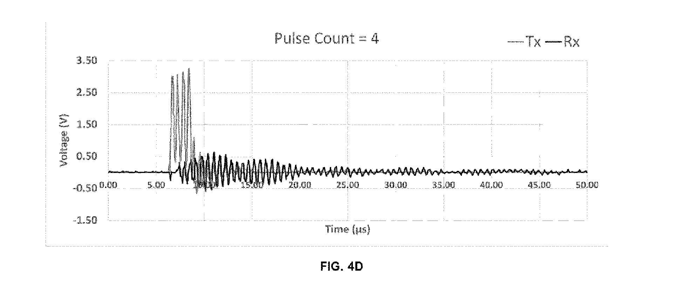

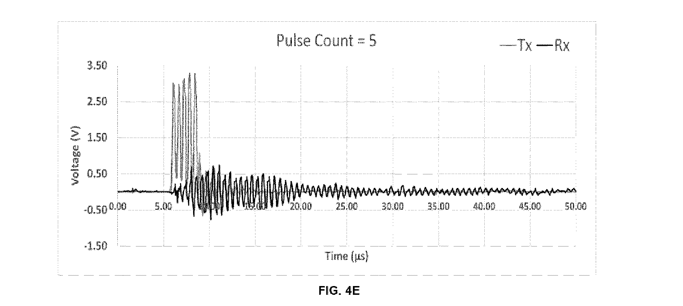

To determine the effect of the number of pulses, a series of measurements were made with different numbers of pulses per packet and can be seen FIG. 4A through 4E. Trigger and response received for 1 Pulse per packet (as in FIG. 4A), 2 Pulse per packet (as in FIG. 4B), 3 Pulse per packet (as in FIG. 4C), and 4 Pulse per packet (as in FIG. 4D), and 5 Pulse per packet (as in FIG. 4E) is shown.

**Table 1**

| **No of Pulse per packet** | **Packet Width (US)** | **Response Amplitude (V approx.)** |
|---|---|---|
| 1 | 0.55 | 0.25 |
| 2 | 1.1 | 0.50 |
| 3 | 1.65 | 0.75 |
| 4 | 2.2 | 1 |
| 5 | 2.75 | 1.25 |

As depicted in Table 1, it was observed that a total of 5 pulses per packet was an acceptable choice as it resulted in an observable response on the receiver and was also not long enough to interfere with the response signal.

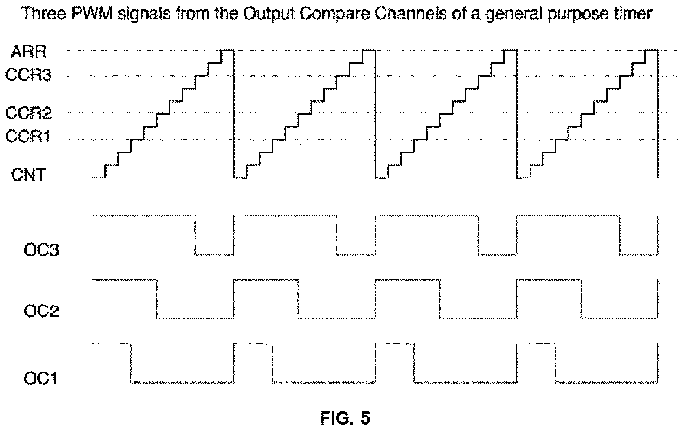

The frequency of 1.7 MHz is quite high for most of the MCUs to produce. Therefore, an ARM-based board which operates at a much higher clock speed was used to produce the signal. These timed signals of different frequency and duty cycles were made possible using Timers. Timers are the values that increments by a unit every time the system clock ticks a certain number of times and once the value of the timer reaches its maximum value, Auto-Reload Register (ARR), it overflows and starts again. Both values, the number of ticks required for the timer's increment, and the max value can be adjusted. As one can realize the upper limit of the timer essentially determines the frequency with which the timer is overflowing. Thus, by changing this upper limit value of the timer one can control the frequency of the signal. To control the width of a pulse, the value of a timer is compared to some fixed value in Capture Compare Register (CCR) which lies in between 0 and the max value (ARR) of the timer. The position of the output pin is changed once this CCR value is crossed. Thus, by changing this compare value, one can change the width of the Pulse Width Modulated (PWM) signal, as seen for output channels (OC1, OC2 & OC3) in FIG. 5.

Using these 2 values, a PWM signal with varying frequency and duty cycle can be produced. The frequencies that can be generated using the above technique are finite as there are only finite states of a counter possible. Thus, the exact target resonance frequency might not get produced but the closest value possible which was producing maximum response was selected.

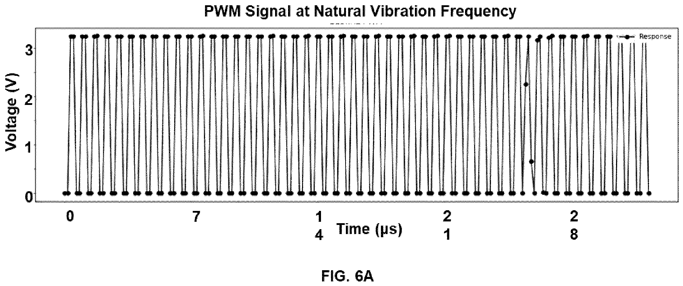

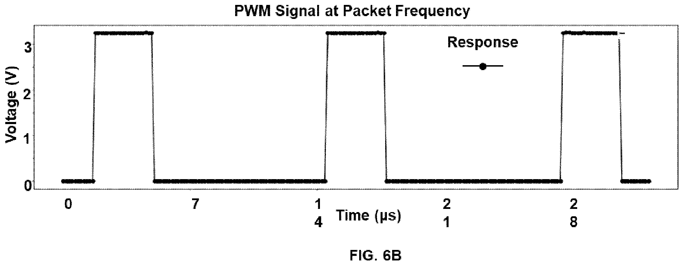

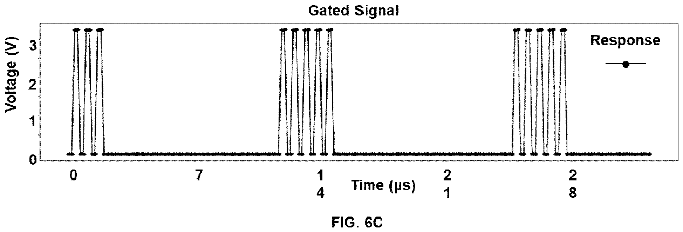

**Gated pulse signal (excitation signal):** Generation of individual PWM signals can be done like this, but what is required is 5 packaged pulses and some wait time for listening to the response. To generate a packaged signal, 2 PWM signals were used with different frequencies (pulse frequency and packet frequency) and overlapped to obtain AND operation. One example signal (as shown in FIG. 6A) is a high-frequency signal with the same frequency as the natural frequency of the crystal and a duty cycle of 50%. The frequency of the packets, on the other hand, depends on the wait time, the time for which it is expected to listen for the response signal. The width of this PWM will correspond to the width of the pulse packet. The US signal profile can be seen in FIG. 6B. Now, by combining the above two signals the gated pulse signal (shown in FIG. 6C) is generated such that the high-frequency pulses are produced only when the second signal is in "on" state. Thus, producing high-frequency pulse packets for some time and then completely "off" for the rest of the time. Along with the frequency and duty cycle of the signal, the number of pulses in the wave packet can be controlled by changing the duty cycle of the lower-frequency signal. As the board is operated at 3.3V, signals produced by it also have an amplitude of 3.3V.

**US signal Response Capture:** For capturing of response an identical piezoelectric transducer is placed on the other side of the sample. When an ultrasonic signal hits this receiver, it causes it to bend and flex which results in the generation of an electrical signal. One of the challenges in capturing the response is that the signal is having very high frequency which is beyond the capabilities of any popular programming board. Here, a portable Digital Oscilloscope is used to capture the response from the receiver piezoelectric crystal. It gets stored in the form of a time series data for a fixed time interval, which consists of multiple trigger and response instances.

**Signal Analysis:** The oscilloscope captures a continuous signal of fixed length which contains multiple pulse and response pairs. For extracting features from this, individual instances of the pulse and response need to be extracted. Each of these time intervals may contain up to 250 of these instances. Thus, required is to extract those instances automatically as manually would be very time intensive.

The start of an instance is marked by the start of the wave packet in the trigger signal. This start of the wave packet is detected automatically in a time series signal and a fixed length of data points (up to the start of the next trigger signal) is cropped out automatically.

To slice the signal into individual instances of trigger and response (also referred to as excitation-response pair), a script is used that reads and imports data from the source file generated from the oscilloscope.

Steps being followed to slicing: Take the trigger signal in the form of an array and find the first point that is significantly higher than the rest of the signal, which will be the first point of the trigger signal.
1. Now, the point in the vicinity that is at the regular LOW level will mark the actual start of the pulse signal, and we can take the corresponding point in the response signal as the start of the response signal.
2. With all the 'trigger' start points known, the specified number of data points for trigger and response signal, say 400 (corresponding to the length of interval), can be transferred to a matrix that has this interval as a row and other instances stacked as rows in the matrix.

**Feature Extraction:** After slicing, each instance of trigger and response (excitation-response pair) is now in the form of stacked rows in the matrix. But this sliced response is still an oscillatory signal, and several features need to be extracted.

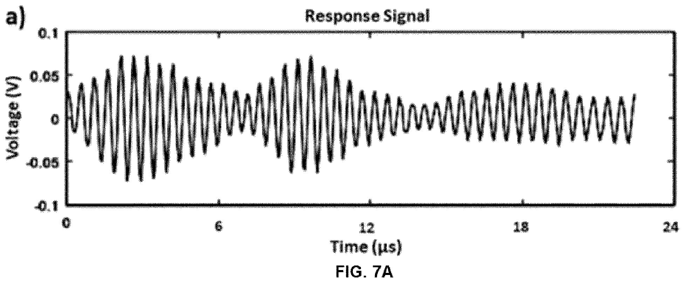

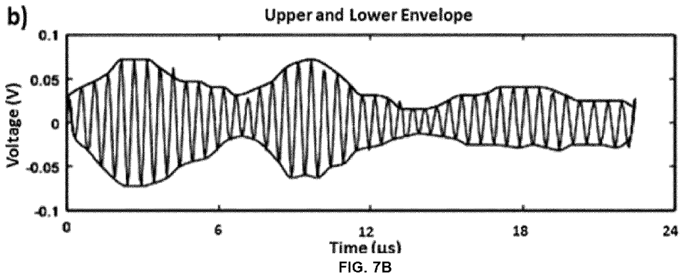

**Processing of the US signal response:** Firstly, an enclosing envelope of this oscillatory signal is constructed using moving maximum and moving minimum techniques. For the moving maximum technique, for a point in the signal its value is replaced with the maximum value within a window around it, say 20 points. Now, this is carried out for each point in the signal and a bounding upper curve (referred hereinafter as upper curve) is generated. Similarly, for the minimum point, the value was replaced with the minimum value in the vicinity, and a bounding lower curve (referred hereinafter lower curve) is obtained. This is explained in Figure 7A and 7B.

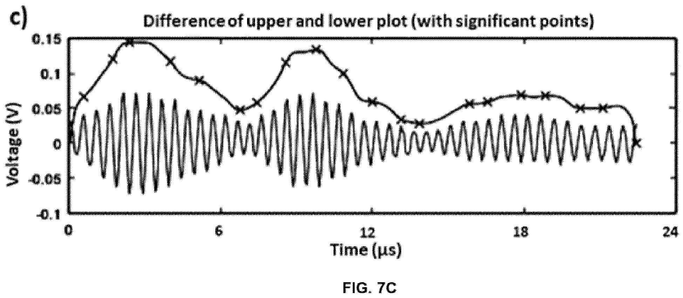

After creating the upper curve and the lower curve, or the bounding envelopes, their difference is taken to obtain a difference curve, which enhances the peaks in the response signal, resulting in an all-positive curve (shown in FIG. 7C). Now, this difference curve was divided into 20 equal intervals and for each interval, the most significant point was selected based on the following rules:
1. If the maximum and minimum of that interval lie on the edge, then the middle point of that interval was treated as the significant point.
2. If there is a minimum and maximum inside the interval, then that point was treated as a significant point.

Using this a set of 20 points were created corresponding to each instance row. The same process was then carried out with the upper curve, and it was reduced to another 20-point row vector. The last value that is treated as a feature is the ratio of the trigger amplitude to the maximum response amplitude, resulting in a vector with a total of 41 features.

**Machine Learning Model:** Sometimes it might not be possible to put constraints for every single feature like the number of pulses used, material, number of peals in the response due to echo, echo profile, etc. Therefore, a machine learning-based approach is utilized for capturing all these features where these relationships are learned automatically. To train the machine learning classifier to differentiate between levels of scaling, a series of measurements are taken with 5 different experimental conditions.

**Scaling Level Estimation:** Once the ML model is trained (also referred to as pretrained ML model) it is utilized for the classification of new samples. For classifying an unknown sample, all the following steps need to be carried out.
1. Slicing of signal
2. Processing of the signal
3. Extracting features
4. Estimations using ML Classifier

Once the feature vector for the unknown sample is extracted, it is fed into the classifier which classifies based on the degree of scaling (No scaling, Thin Scaling, Thick Scaling)

FIGS. 2A through 2B (collectively referred as FIG. 2) is a flow diagram illustrating a method 200 for estimation of scaling in objects by processing ultrasound responses using machine learning (ML), using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured to receive the ultrasonic signal response reflected by an object, such as a pipe or tank under inspection. The reflection is a result of ultrasound signal is incident on the object, wherein the profile of the ultrasound signal is the gated pulse signal with a plurality of pulses per packet as the explained in FIGS. 6A through 6C. The received ultrasonic signal response for each of the plurality of pulses, is captured across a predefined time interval.

As explained in FIGS. 6A through 6C, the ultrasound signal having the gated pulse signal profile is generated by exciting a piezoelectric transducer with a low-voltage excitation signal comprising an electrical gated signal with the plurality pulses having frequency same as a natural frequency of a crystal of the piezo electric transducer. The optimal number of the plurality of pulses is experimentally identified as lying between a minimum number of pulses and a maximum number of pulses. The minimum number of pulses are required to generate an observable ultrasonic signal response, and the maximum number of pulses define a maximum limit of pulses used to eliminate interference of the gated pulse signal with the ultrasonic response received. The optimal number of pulses are set by varying the width of the packet of the electrical gated signal.

At step 204 of the method 200, the one or more hardware processors 104 are configured to process the ultrasonic signal response received for each of the plurality of pulses to obtain, (i) an envelope of ultrasonic response signal comprising an upper curve and a lower curve, and (ii) a difference curve by computing difference between the upper curve and the lower curve. The FIGS. 7A, 7B and 7C depicted and discussed in conjunction with FIG. 1B explain the same.

At step 206 of the method 200, the one or more hardware processors 104 are configured to extract a plurality of features from the processed ultrasonic signal response for each of the plurality of pulses. The feature extraction can be understood with respect to FIGS. 7A through 7C. The feature extraction comprises following steps:
1. Slicing the upper curve and the difference curve into a plurality of predefined segment intervals to obtain a significant point per segment interval representing an associated feature among the plurality of features. The significant point is (i) a middle point of a segment interval if a maximum value and a minimum value of the segment interval lies on edge of the segment interval, and (ii) if the minimum value or the maximum value of the segment interval lies inside the segment interval, the associated point is the significant point. Experimental results indicated '20' segments (plurality segment intervals) to be optimal, as too many segments require a larger example dataset. Similarly, too little segments will lose the inherent details of the envelope (upper curve and the difference curve).
2. Deriving an additional significant point by computing a ratio of a pulse amplitude of the plurality of pulses to a maximum response amplitude in the ultrasonic signal response.
3. The significant point per segment interval of the upper curve and the difference curve and the additional significant point define the plurality of features. The ratio of trigger amplitude to the maximum response captures the attenuation of the signal through thick and thin scaling case. This can help normalize the features and allows the ML model to work better.

At step 208 of the method 200, the one or more hardware processors 104 are configured to process the plurality of features for each of the plurality of pulses by the pretrained Machine Learning (ML) model to estimate level of scaling in the object as one of no scaling, thin scaling, and thick scaling.

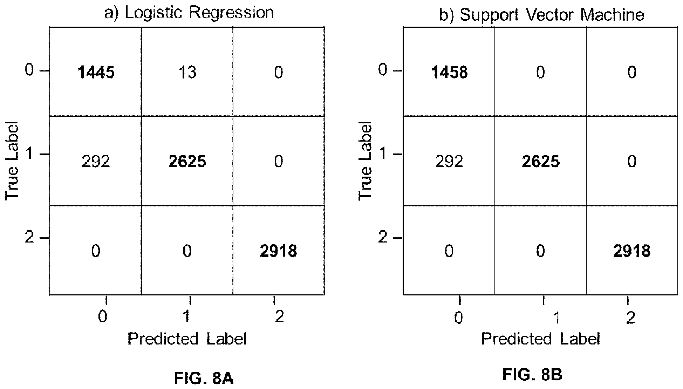

FIGS. 8A and 8B depict performance of the system 100 with different ML models.

Experiment conditions:
a) Unscaled Sample
b) Thin scaling with the trigger on the smooth side
c) Thin scaling with the trigger on the scaled side
d) Thick scaling with the trigger on the smooth side
e) Thick scaling with the trigger on the scaled side

20 measurements were taken for each condition resulting in a total of 100 readings, each containing multiple sets of trigger response instances. The dataset which was created after the slicing and feature extraction step is taken with their labels as the level of scaling present was used to train a classifier. Here, 2 types of models are tested, Logistic Regression; and Support Vector Machine (SVM).

Two machine learning models, Logistic Regression and SVM were employed for the classification, with a train dataset size of 75% and a test dataset size of 25%.

**Table 2**

| . Key to the labels: | |
|---|---|
| **Label** | **Scaling Level** |
| 0 | No Scaling |
| 1 | Thin Scaling |
| 2 | Thick Scaling |

The diagonal boxes of FIGS. 8A and 8B correspond to the cases in which the estimated and true labels are the same. So, the number in those boxes indicated the number of examples that were identified correctly.

**Table 3**

| **Method** | **Correct Estimations** | **Total** | **Accuracy (%)** |
|---|---|---|---|
| Logistic Regression | 6988 | 7293 | 95.81 |
| Support Vector Machine | 7001 | 7293 | 95.99 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Thus, it can be observed that Machine Learning based scaling estimation in the art mostly used a complex guided wave setup. Further, selection of features for ML is critical to the predict significant points on the US signal response providing appropriate but minimum features that capture maximum scaling characteristics, thus keeping the ML features minimal to provide time and resource efficient computation. The method and system for estimation of scaling in objects by processing ultrasound responses using ML is disclosed. The system uses low-voltage pulse packets to generate ultrasonic (US) waves, using an economically repurposed piezoelectric transducer. The train of pulses in the single trigger (excitation) signal used by the system enables penetrating metal structures even at low-voltage. These US signal response from the object-scaling interface and scaling-fluid interface, is captured using the repurposed piezoelectric transducer and processed to generate the envelope of the US signal response, and unique 42 features are extracted. A pretrained ML model processes the features to estimate various levels of scaling present in the object.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for scaling estimation, the method comprising:
receiving (202), by one or more hardware processors, an ultrasonic signal response reflected by an object under inspection when an ultrasound signal is incident on the object, wherein a profile of the ultrasound signal is a gated pulse signal with a plurality of pulses per packet, and wherein the received ultrasonic signal response for each of the plurality of pulses is captured across a predefined time interval;
processing (204), by the one or more hardware processors, the ultrasonic signal response received for each of the plurality of pulses to obtain (i) an envelope of the ultrasonic response signal comprising an upper curve and a lower curve, and (ii) a difference curve by computing difference between the upper curve and the lower curve;
extracting (206), by the one or more hardware processors, a plurality of features from the processed ultrasonic signal response for each of the plurality of pulses, comprising:
slicing the upper curve and the difference curve into a plurality of predefined segment intervals to obtain a significant point per segment interval representing an associated feature among the plurality of features, wherein the significant point is (i) a middle point of the segment interval if a maximum value and a minimum value of the segment interval lies on edge of the segment interval, and (ii) if the minimum value or the maximum value of the segment interval lies inside the segment interval, the associated point is the significant point; and
deriving an additional significant point by computing a ratio of a pulse amplitude of the plurality of pulses to a maximum response amplitude in the ultrasonic signal response,
wherein the significant point per segment interval of the upper curve and the difference curve, and the additional significant point define the plurality of features; and
processing (208), by the one or more hardware processors, the plurality of features for each of the plurality of pulses by a pretrained Machine Learning (ML) model to estimate level of scaling in the object as one of no scaling, thin scaling, and thick scaling.

2. The processor implemented method of claim 1, wherein the ultrasound signal having the gated pulse signal profile is generated by exciting a piezoelectric transducer with a low-voltage excitation signal comprising an electrical gated signal with the plurality pulses having frequency same as a natural frequency of a crystal of the piezo electric transducer,
wherein an optimal number of the plurality of pulses is experimentally identified as lying between a minimum number of pulses and a maximum number of pulses, and
wherein i) the minimum number of pulses are required to generate an observable ultrasonic signal response, and ii) the maximum number of pulses define a maximum limit of pulses used to eliminate interference of the gated pulse signal with the ultrasonic response received, and wherein the optimal number of pulses are set by varying a width of the packet of the electrical gated signal.

3. The processor implemented method of claim 1, wherein the received ultrasonic signal response for each of the plurality of pulses is stored as an excitation-response pair.

4. A system (100) for scaling estimation, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
receive an ultrasonic signal response reflected by an object under inspection when an ultrasound signal is incident on the object, wherein a profile of the ultrasound signal is a gated pulse signal with a plurality of pulses per packet, and wherein the received ultrasonic signal response for each of the plurality of pulses, is captured across a predefined time interval;
process the ultrasonic signal response received for each of the plurality of pulses to obtain, (i) an envelope of ultrasonic response signal comprising an upper curve and a lower curve, and (ii) a difference curve by computing difference between the upper curve and the lower curve;
extract a plurality of features from the processed ultrasonic signal response for each of the plurality of pulses comprising:
slicing the upper curve and the difference curve, into a plurality of predefined segment intervals to obtain a significant point per segment interval representing an associated feature among the plurality of features, wherein the significant point is (i) a middle point of a segment interval if a maximum value and a minimum value of the segment interval lies on edge of the segment interval, and (ii) if the minimum value or the maximum value of the segment interval lies inside the segment interval, the associated point is the significant point; and
deriving an additional significant point by computing a ratio of a pulse amplitude of the plurality of pulses to a maximum response amplitude in the ultrasonic signal response,
wherein the significant point per segment interval of the upper curve and the difference curve, and the additional significant point define the plurality of features; and
processing the plurality of features for each of the plurality of pulses by a pretrained Machine Learning (ML) model to estimate level of scaling in the object as one of no scaling, thin scaling, and thick scaling.

5. The system of claim 4, further comprising a piezoelectric transducer, wherein the system is configured to generate the ultrasound signal having the gated pulse signal profile by exciting a piezoelectric transducer with a low-voltage excitation signal comprising an electrical gated signal with the plurality pulses having frequency same as a natural frequency of a crystal of the piezo electric transducer,
wherein an optimal number of the plurality of pulses is experimentally identified as lying between a minimum number of pulses and a maximum number of pulses, and
wherein the i) minimum number of pulses are required to generate an observable ultrasonic signal response, and ii) the maximum number of pulses define the maximum limit of pulses used to eliminate interference of the gated pulse signal with the ultrasonic response received, and wherein the optimal number of pulses are set are by varying a width of the packet of the electrical gated signal.

6. The system of claim 4, wherein the received ultrasonic signal response for each of the plurality of pulses is stored as an excitation-response pair.

7. One or more non-transitory machine-readable information storage mediums comprising one or more instructions which when executed by one or more hardware processors cause:
receiving an ultrasonic signal response reflected by an object under inspection when an ultrasound signal is incident on the object, wherein a profile of the ultrasound signal is a gated pulse signal with a plurality of pulses per packet, and wherein the received ultrasonic signal response for each of the plurality of pulses is captured across a predefined time interval;
processing the ultrasonic signal response received for each of the plurality of pulses to obtain (i) an envelope of the ultrasonic response signal comprising an upper curve and a lower curve, and (ii) a difference curve by computing difference between the upper curve and the lower curve;
extracting a plurality of features from the processed ultrasonic signal response for each of the plurality of pulses, comprising:
slicing the upper curve and the difference curve into a plurality of predefined segment intervals to obtain a significant point per segment interval representing an associated feature among the plurality of features, wherein the significant point is (i) a middle point of the segment interval if a maximum value and a minimum value of the segment interval lies on edge of the segment interval, and (ii) if the minimum value or the maximum value of the segment interval lies inside the segment interval, the associated point is the significant point; and
deriving an additional significant point by computing a ratio of a pulse amplitude of the plurality of pulses to a maximum response amplitude in the ultrasonic signal response,
wherein the significant point per segment interval of the upper curve and the difference curve, and the additional significant point define the plurality of features; and
processing the plurality of features for each of the plurality of pulses by a pretrained Machine Learning (ML) model to estimate level of scaling in the object as one of no scaling, thin scaling, and thick scaling.

## Patentansprüche

1. Prozessorimplementiertes Verfahren (200) zur Skalierungsschätzung, wobei das Verfahren Folgendes umfasst:
Empfangen (202), durch einen oder mehrere Hardwareprozessoren, einer Ultraschallsignalantwort, die von einem zu prüfenden Objekt reflektiert wird, wenn ein Ultraschallsignal auf das Objekt einfällt, wobei ein Profil des Ultraschallsignals ein gesteuertes Impulssignal mit einer Mehrzahl von Impulsen pro Paket ist, und wobei die empfangene Ultraschallsignalantwort für jeden der Mehrzahl von Impulsen über ein vordefiniertes Zeitintervall erfasst wird;
Verarbeiten (204), durch den einen oder die mehreren Hardwareprozessoren, der für jeden der Mehrzahl von Impulsen empfangenen Ultraschallsignalantwort, um (i) eine Hüllkurve des Ultraschallantwortsignals, die eine obere Kurve und eine untere Kurve umfasst, und (ii) eine Differenzkurve durch Berechnen einer Differenz zwischen der oberen Kurve und der unteren Kurve zu erhalten;
Extrahieren (206), durch den einen oder die mehreren Hardwareprozessoren, einer Mehrzahl von Merkmalen aus der verarbeiteten Ultraschallsignalantwort für jeden der Mehrzahl von Impulsen, umfassend:
Schneiden der oberen Kurve und der Differenzkurve in eine Mehrzahl von vordefinierten Segmentintervallen, um einen signifikanten Punkt pro Segmentintervall zu erhalten, der ein zugeordnetes Merkmal unter der Mehrzahl von Merkmalen darstellt, wobei der signifikante Punkt (i) ein Mittelpunkt des Segmentintervalls ist, wenn ein Maximalwert und ein Minimalwert des Segmentintervalls am Rand des Segmentintervalls liegen, und (ii), wenn der Minimalwert oder der Maximalwert des Segmentintervalls innerhalb des Segmentintervalls liegt, der zugeordnete Punkt der signifikante Punkt ist; und
Ableiten eines zusätzlichen signifikanten Punkts durch Berechnen eines Verhältnisses einer Impulsamplitude der Mehrzahl von Impulsen zu einer maximalen Antwortamplitude in der Ultraschallsignalantwort,
wobei der signifikante Punkt pro Segmentintervall der oberen Kurve und der Differenzkurve und der zusätzliche signifikante Punkt die Mehrzahl von Merkmalen definieren; und
Verarbeiten (208), durch den einen oder die mehreren Hardwareprozessoren, der Mehrzahl von Merkmalen für jeden der Mehrzahl von Impulsen durch ein vortrainiertes Maschinenlernmodell (ML-Modell), um einen Skalierungsgrad in dem Objekt als eines von keiner Skalierung, dünner Skalierung und dicker Skalierung zu schätzen.

2. Prozessorimplementiertes Verfahren nach Anspruch 1, wobei das Ultraschallsignal mit dem gesteuerten Impulssignalprofil durch Erregen eines piezoelektrischen Wandlers mit einem Niederspannungserregungssignal erzeugt wird, das ein elektrisches gesteuertes Signal umfasst, wobei die Mehrzahl von Impulsen dieselbe Frequenz wie eine Eigenfrequenz eines Kristalls des piezoelektrischen Wandlers aufweist,
wobei eine optimale Anzahl der Mehrzahl von Impulsen experimentell als zwischen einer minimalen Anzahl von Impulsen und einer maximalen Anzahl von Impulsen liegend identifiziert wird, und
wobei i) die minimale Anzahl von Impulsen erforderlich ist, um eine beobachtbare Ultraschallsignalantwort zu erzeugen, und ii) die maximale Anzahl von Impulsen eine maximale Grenze von Impulsen definiert, die verwendet wird, um eine Interferenz des gesteuerten Impulssignals mit der empfangenen Ultraschallantwort zu eliminieren, und wobei die optimale Anzahl von Impulsen durch Variieren einer Breite des Pakets des elektrischen gesteuerten Signals eingestellt wird.

3. Prozessorimplementiertes Verfahren nach Anspruch 1, wobei die empfangene Ultraschallsignalantwort für jeden der Mehrzahl von Impulsen als ein Erregungsantwortpaar gespeichert wird.

4. System (100) zur Skalierungsschätzung, wobei das System (100) Folgendes umfasst:
einen Speicher (102), der Anweisungen speichert;
eine oder mehrere Eingabe/Ausgabe(E/A)-Schnittstellen (106); und
einen oder mehrere Hardwareprozessoren (104), die mit dem Speicher (102) über die eine oder die mehreren E/A-Schnittstellen (106) gekoppelt sind, wobei der eine oder die mehreren Hardwareprozessoren (104) durch die Anweisungen konfiguriert sind zum:
Empfangen einer Ultraschallsignalantwort, die von einem zu prüfenden Objekt reflektiert wird, wenn ein Ultraschallsignal auf das Objekt einfällt, wobei ein Profil des Ultraschallsignals ein gesteuertes Impulssignal mit einer Mehrzahl von Impulsen pro Paket ist, und wobei die empfangene Ultraschallsignalantwort für jeden der Mehrzahl von Impulsen über ein vordefiniertes Zeitintervall erfasst wird;
Verarbeiten der für jeden der Mehrzahl von Impulsen empfangenen Ultraschallsignalantwort, um (i) eine Hüllkurve des Ultraschallantwortsignals, die eine obere Kurve und eine untere Kurve umfasst, und (ii) eine Differenzkurve durch Berechnen einer Differenz zwischen der oberen Kurve und der unteren Kurve zu erhalten;
Extrahieren einer Mehrzahl von Merkmalen aus der verarbeiteten Ultraschallsignalantwort für jeden der Mehrzahl von Impulsen, umfassend:
Schneiden der oberen Kurve und der Differenzkurve in eine Mehrzahl von vordefinierten Segmentintervallen, um einen signifikanten Punkt pro Segmentintervall zu erhalten, der ein zugeordnetes Merkmal unter der Mehrzahl von Merkmalen darstellt, wobei der signifikante Punkt (i) ein Mittelpunkt eines Segmentintervalls ist, wenn ein Maximalwert und ein Minimalwert des Segmentintervalls am Rand des Segmentintervalls liegen, und (ii), wenn der Minimalwert oder der Maximalwert des Segmentintervalls innerhalb des Segmentintervalls liegt, der zugeordnete Punkt der signifikante Punkt ist; und
Ableiten eines zusätzlichen signifikanten Punkts durch Berechnen eines Verhältnisses einer Impulsamplitude der Mehrzahl von Impulsen zu einer maximalen Antwortamplitude in der Ultraschallsignalantwort,
wobei der signifikante Punkt pro Segmentintervall der oberen Kurve und der Differenzkurve und der zusätzliche signifikante Punkt die Mehrzahl von Merkmalen definieren; und
Verarbeiten der Mehrzahl von Merkmalen für jeden der Mehrzahl von Impulsen durch ein vortrainiertes Maschinenlernmodell (ML-Modell), um einen Skalierungsgrad in dem Objekt als eines von keiner Skalierung, dünner Skalierung und dicker Skalierung zu schätzen.

5. System nach Anspruch 4, ferner umfassend einen piezoelektrischen Wandler, wobei das System konfiguriert ist, um das Ultraschallsignal mit dem gesteuerten Impulssignalprofil durch Erregen eines piezoelektrischen Wandlers mit einem Niederspannungserregungssignal zu erzeugen, das ein elektrisches gesteuertes Signal umfasst, wobei die Mehrzahl von Impulsen dieselbe Frequenz wie eine Eigenfrequenz eines Kristalls des piezoelektrischen Wandlers aufweist,
wobei eine optimale Anzahl der Mehrzahl von Impulsen experimentell als zwischen einer minimalen Anzahl von Impulsen und einer maximalen Anzahl von Impulsen liegend identifiziert wird, und
wobei i) die minimale Anzahl von Impulsen erforderlich ist, um eine beobachtbare Ultraschallsignalantwort zu erzeugen, und ii) die maximale Anzahl von Impulsen die maximale Grenze von Impulsen definiert, die verwendet wird, um eine Interferenz des gesteuerten Impulssignals mit der empfangenen Ultraschallantwort zu eliminieren, und wobei die optimale Anzahl von Impulsen durch Variieren einer Breite des Pakets des elektrischen gesteuerten Signals eingestellt wird.

6. System nach Anspruch 4, wobei die empfangene Ultraschallsignalantwort für jeden der Mehrzahl von Impulsen als ein Erregungsantwortpaar gespeichert wird.

7. Ein oder mehrere nichtflüchtige maschinenlesbare Informationsspeichermedien, umfassend eine oder mehrere Anweisungen, die bei Ausführung durch einen oder mehrere Hardwareprozessoren bewirken:
Empfangen einer Ultraschallsignalantwort, die von einem zu prüfenden Objekt reflektiert wird, wenn ein Ultraschallsignal auf das Objekt einfällt, wobei ein Profil des Ultraschallsignals ein gesteuertes Impulssignal mit einer Mehrzahl von Impulsen pro Paket ist, und wobei die empfangene Ultraschallsignalantwort für jeden der Mehrzahl von Impulsen über ein vordefiniertes Zeitintervall erfasst wird;
Verarbeiten der für jeden der Mehrzahl von Impulsen empfangenen Ultraschallsignalantwort, um (i) eine Hüllkurve des Ultraschallantwortsignals, die eine obere Kurve und eine untere Kurve umfasst, und (ii) eine Differenzkurve durch Berechnen einer Differenz zwischen der oberen Kurve und der unteren Kurve zu erhalten;
Extrahieren einer Mehrzahl von Merkmalen aus der verarbeiteten Ultraschallsignalantwort für jeden der Mehrzahl von Impulsen, umfassend:
Schneiden der oberen Kurve und der Differenzkurve in eine Mehrzahl von vordefinierten Segmentintervallen, um einen signifikanten Punkt pro Segmentintervall zu erhalten, der ein zugeordnetes Merkmal unter der Mehrzahl von Merkmalen darstellt, wobei der signifikante Punkt (i) ein Mittelpunkt des Segmentintervalls ist, wenn ein Maximalwert und ein Minimalwert des Segmentintervalls am Rand des Segmentintervalls liegen, und (ii), wenn der Minimalwert oder der Maximalwert des Segmentintervalls innerhalb des Segmentintervalls liegt, der zugeordnete Punkt der signifikante Punkt ist; und
Ableiten eines zusätzlichen signifikanten Punkts durch Berechnen eines Verhältnisses einer Impulsamplitude der Mehrzahl von Impulsen zu einer maximalen Antwortamplitude in der Ultraschallsignalantwort,
wobei der signifikante Punkt pro Segmentintervall der oberen Kurve und der Differenzkurve und der zusätzliche signifikante Punkt die Mehrzahl von Merkmalen definieren; und
Verarbeiten der Mehrzahl von Merkmalen für jeden der Mehrzahl von Impulsen durch ein vortrainiertes Maschinenlernmodell (ML-Modell), um einen Skalierungsgrad in dem Objekt als eines von keiner Skalierung, dünner Skalierung und dicker Skalierung zu schätzen.

## Revendications

1. Procédé mis en œuvre par processeur (200) pour une estimation de dépôts, le procédé comprenant :
la réception (202), par un ou plusieurs processeurs matériels, d'une réponse de signal ultrasonore réfléchie par un objet sous inspection lorsqu'un signal ultrasonore est incident sur l'objet, dans lequel un profil du signal ultrasonore est un signal impulsionnel fenêtré avec une pluralité d'impulsions par paquet, et dans lequel la réponse de signal ultrasonore reçue pour chacune de la pluralité d'impulsions est capturée sur un intervalle de temps prédéfini ;
le traitement (204), par les un ou plusieurs processeurs matériels, de la réponse de signal ultrasonore reçue pour chacune de la pluralité d'impulsions pour obtenir (i) une enveloppe du signal de réponse ultrasonore comprenant une courbe supérieure et une courbe inférieure, et (ii) une courbe de différence en calculant une différence entre la courbe supérieure et la courbe inférieure ;
l'extraction (206), par les un ou plusieurs processeurs matériels, d'une pluralité de caractéristiques de la réponse de signal ultrasonore traitée pour chacune de la pluralité d'impulsions, comprenant :
le découpage de la courbe supérieure et de la courbe de différence en une pluralité d'intervalles de segment prédéfinis pour obtenir un point significatif par intervalle de segment représentant une caractéristique associée parmi la pluralité de caractéristiques, dans lequel le point significatif est (i) un point médian de l'intervalle de segment si une valeur maximale et une valeur minimale de l'intervalle de segment se trouvent sur un bord de l'intervalle de segment, et (ii) si la valeur minimale ou la valeur maximale de l'intervalle de segment se trouve à l'intérieur de l'intervalle de segment, le point associé est le point significatif ; et
la dérivation d'un point significatif supplémentaire en calculant un rapport d'une amplitude d'impulsion de la pluralité d'impulsions sur une amplitude de réponse maximale dans la réponse de signal ultrasonore,
dans lequel le point significatif par intervalle de segment de la courbe supérieure et de la courbe de différence, et le point significatif supplémentaire définissent la pluralité de caractéristiques ; et
le traitement (208), par les un ou plusieurs processeurs matériels, de la pluralité de caractéristiques pour chacune de la pluralité d'impulsions par un modèle d'apprentissage machine (ML) préentraîné pour estimer un niveau de dépôt dans l'objet comme l'une d'une absence de dépôt, d'un dépôt mince, et d'un dépôt épais.

2. Procédé mis en œuvre par processeur selon la revendication 1, dans lequel le signal ultrasonore ayant le profil de signal impulsionnel fenêtré est généré en excitant un transducteur piézoélectrique avec un signal d'excitation basse tension comprenant un signal électrique fenêtré avec la pluralité d'impulsions ayant une fréquence identique à une fréquence propre d'un cristal du transducteur piézoélectrique,
dans lequel un nombre optimal de la pluralité d'impulsions est expérimentalement identifié comme se trouvant entre un nombre minimal d'impulsions et un nombre maximal d'impulsions, et
dans lequel i) le nombre minimal d'impulsions est requis pour générer une réponse de signal ultrasonore observable, et ii) le nombre maximal d'impulsions définit une limite maximale d'impulsions utilisées pour éliminer une interférence du signal impulsionnel fenêtré avec la réponse ultrasonore reçue, et dans lequel le nombre optimal d'impulsions est établi en faisant varier une largeur du paquet du signal électrique fenêtré.

3. Procédé mis en œuvre par processeur selon la revendication 1, dans lequel la réponse de signal ultrasonore reçue pour chacune de la pluralité d'impulsions est stockée comme une paire d'excitation-réponse.

4. Système (100) pour une estimation de dépôts, le système (100) comprenant :
une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :
recevoir une réponse de signal ultrasonore réfléchie par un objet sous inspection lorsqu'un signal ultrasonore est incident sur l'objet, dans lequel un profil du signal ultrasonore est un signal impulsionnel fenêtré avec une pluralité d'impulsions par paquet, et dans lequel la réponse de signal ultrasonore reçue pour chacune de la pluralité d'impulsions est capturée sur un intervalle de temps prédéfini ;
traiter la réponse de signal ultrasonore reçue pour chacune de la pluralité d'impulsions pour obtenir (i) une enveloppe de signal de réponse ultrasonore comprenant une courbe supérieure et une courbe inférieure, et (ii) une courbe de différence en calculant une différence entre la courbe supérieure et la courbe inférieure ;
extraire une pluralité de caractéristiques de la réponse de signal ultrasonore traitée pour chacune de la pluralité d'impulsions comprenant :
le découpage de la courbe supérieure et de la courbe de différence, en une pluralité d'intervalles de segment prédéfinis pour obtenir un point significatif par intervalle de segment représentant une caractéristique associée parmi la pluralité de caractéristiques, dans lequel le point significatif est (i) un point médian d'un intervalle de segment si une valeur maximale et une valeur minimale de l'intervalle de segment se trouvent sur un bord de l'intervalle de segment, et (ii) si la valeur minimale ou la valeur maximale de l'intervalle de segment se trouve à l'intérieur de l'intervalle de segment, le point associé est le point significatif ; et
la dérivation d'un point significatif supplémentaire en calculant un rapport d'une amplitude d'impulsion de la pluralité d'impulsions sur une amplitude de réponse maximale dans la réponse de signal ultrasonore,
dans lequel le point significatif par intervalle de segment de la courbe supérieure et de la courbe de différence, et le point significatif supplémentaire définissent la pluralité de caractéristiques ; et
le traitement de la pluralité de caractéristiques pour chacune de la pluralité d'impulsions par un modèle d'apprentissage machine (ML) préentraîné pour estimer un niveau de dépôt dans l'objet comme l'une d'une absence de dépôt, d'un dépôt mince, et d'un dépôt épais.

5. Système selon la revendication 4, comprenant en outre un transducteur piézoélectrique, dans lequel le système est configuré pour générer le signal ultrasonore ayant le profil de signal impulsionnel fenêtré en excitant un transducteur piézoélectrique avec un signal d'excitation basse tension comprenant un signal électrique fenêtré avec la pluralité d'impulsions ayant une fréquence identique à une fréquence propre d'un cristal du transducteur piézoélectrique,
dans lequel un nombre optimal de la pluralité d'impulsions est expérimentalement identifié comme se trouvant entre un nombre minimal d'impulsions et un nombre maximal d'impulsions, et
dans lequel i) le nombre minimal d'impulsions est requis pour générer une réponse de signal ultrasonore observable, et ii) le nombre maximal d'impulsions définit la limite maximale d'impulsions utilisées pour éliminer une interférence du signal impulsionnel fenêtré avec la réponse ultrasonore reçue, et dans lequel le nombre optimal d'impulsions est établi en faisant varier une largeur du paquet du signal électrique fenêtré.

6. Système selon la revendication 4, dans lequel la réponse de signal ultrasonore reçue pour chacune de la pluralité d'impulsions est stockée comme une paire d'excitation-réponse.

7. Un ou plusieurs supports de stockage d'informations lisibles par machine non transitoires comprenant une ou plusieurs instructions qui, lorsqu'elles sont exécutées par un ou plusieurs processeurs matériels, amènent :
la réception d'une réponse de signal ultrasonore réfléchie par un objet sous inspection lorsqu'un signal ultrasonore est incident sur l'objet, dans lequel un profil du signal ultrasonore est un signal impulsionnel fenêtré avec une pluralité d'impulsions par paquet, et dans lequel la réponse de signal ultrasonore reçue pour chacune de la pluralité d'impulsions est capturée sur un intervalle de temps prédéfini ;
le traitement de la réponse de signal ultrasonore reçue pour chacune de la pluralité d'impulsions pour obtenir (i) une enveloppe du signal de réponse ultrasonore comprenant une courbe supérieure et une courbe inférieure, et (ii) une courbe de différence en calculant une différence entre la courbe supérieure et la courbe inférieure ;
l'extraction d'une pluralité de caractéristiques de la réponse de signal ultrasonore traitée pour chacune de la pluralité d'impulsions, comprenant :
le découpage de la courbe supérieure et de la courbe de différence en une pluralité d'intervalles de segment prédéfinis pour obtenir un point significatif par intervalle de segment représentant une caractéristique associée parmi la pluralité de caractéristiques, dans lequel le point significatif est (i) un point médian de l'intervalle de segment si une valeur maximale et une valeur minimale de l'intervalle de segment se trouvent sur un bord de l'intervalle de segment, et (ii) si la valeur minimale ou la valeur maximale de l'intervalle de segment se trouve à l'intérieur de l'intervalle de segment, le point associé est le point significatif ; et
la dérivation d'un point significatif supplémentaire en calculant un rapport d'une amplitude d'impulsion de la pluralité d'impulsions sur une amplitude de réponse maximale dans la réponse de signal ultrasonore,
dans lequel le point significatif par intervalle de segment de la courbe supérieure et de la courbe de différence, et le point significatif supplémentaire définissent la pluralité de caractéristiques ; et
le traitement de la pluralité de caractéristiques pour chacune de la pluralité d'impulsions par un modèle d'apprentissage machine (ML) préentraîné pour estimer un niveau de dépôt dans l'objet comme l'une d'une absence de dépôt, d'un dépôt mince, et d'un dépôt épais.
